# EUROPEAN PATENT SPECIFICATION

(11) **EP 3 212 461 B1**
(45) Date of publication and mention of the grant of the patent: **29.04.2020**
(21) Application number: 15787230.0
(22) Date of filing: 30.10.2015
(51) Int. Cl.: B60N 2/28

(54) **ADJUSTABLE CONNECTING BAR FOR A CHILD VEHICLE SEAT**
EINSTELLBARE VERBINDUNGSSTANGE FÜR EINEN KINDERFAHRZEUGSITZ
RAIL DE LIAISON RÉGLABLE POUR UN SIEGE D'ENFANT POUR VEHICULE

(30) Priority: 31.10.2014 SE 1451304
(43) Date of publication of application: 06.09.2017
(73) Proprietor: Holmbergs Safety System Holding AB, 302 45 Halmstad (SE)
(72) Inventor: PERSSON, Jan-Erik, 311 65 Vessigebro (SE)
(74) Representative: AWA Sweden AB
(86) International application number: PCT/EP2015/075255
(87) International publication number: WO 2016/066802

(56) References cited:
- DE-T2- 69 919 942
- US-A1- 2012 172 001

## Description

### TECHNICAL FIELD

The present invention relates to an adjustable connecting bar for releasable fastening of a child safety seat to a vehicle seat having fixedly mounted anchoring members, and to an adjustable mounting arrangement containing a pair of adjustable connecting bars as well as to a child safety seat containing the same.

### BACKGROUND OF THE INVENTION

It is standard practice to secure a child safety seat using releasable "alligator-like" connectors, which are rigidly coupled to the child vehicle seat, to fixedly mounted generally U-shaped rod-like anchoring members normally available at the bottom of the backrest of a passenger vehicle seat. ISOFIX systems are standardized in the international standard ISO 13216 that specifies this type of anchoring system for child safety seats. Examples of this type of connector are given in EP 0619201 and EP 0703113.

Child safety seats connected using ISOFIX systems include cushioned seat shells having seat and back portions, booster cushions with or without side bolsters, and baby carriers. The connectors may be arranged to be retractable between a use position, where the connectors are projecting from the child safety seat, and a stowed position, where the connectors are withdrawn and at least partly enclosed in the child safety seat.

The connection between the child safety seat and the vehicle seat must be as firm and rigid as possible. It is also desirable to provide for adjustment to varying vehicle seat inclinations, dimensions and shapes in order to ensure safe and secure mounting of the child safety seat.

EP 0970842 relates to a mounting means comprising a chassis which is intended to be mounted in a stationary position on the seat bottom of a vehicle seat with the child seat facing forward, and on which two connectors are provided for co-operation with stationary anchoring means, and a carrier displaceable on the chassis, which allows displacement of the child seat towards and away from the seat back of the vehicle seat.

US 8,454,089 relates to a fastening device for a child safety seat comprising connecting elements provided at the leg ends of a bent connecting tube. The legs of the connecting tube are connected by a transversely extending base. The connecting tube hence forms a bow. The base of the bow is mountable in transverse grooves of a latching plate fixed on the child seat. The latching plate thus provides for latching and mounting the bow on the child seat in different longitudinal positions. These different longitudinal positions correspond to different lengths by which the connecting elements protrude from the child seat.

EP 2551150 relates to a child safety seat assembly including a base with two connector arms which are movable back and forth to extend from and retract into the base. An adjustment mechanism includes a manually operable release actuating assembly disposed between the two connector arms and two latches arranged to lock or unlock the connector arms to the base. The child safety seat assembly is further described to include a driving mechanism operable to actuate the latching hook of a locking fastener provided on each connector arm in order to engage or disengage the anchorage bracket of the vehicle. The driving mechanism includes a manually operable fastener release actuator operatively connected with a linking bar, which in turn is connected with the latching hook.

WO 2012/172001 relates to a base, to which a child safety seat can be releasably connected. The base comprises a floor support device, Isofix connectors and a support surface for the child safety seat. The base further comprises a fastening and adjustment mechanism for the child safety seat and the Isofix connectors. The fastening and adjustment mechanism comprises a first handle that is connected to and cooperating with at least one hook and an indicator device and a second handle being connected to a locking device. Document DE69919942T2 discloses an adjustable connecting bar according to the preamble of claim 1

In hitherto known mounting systems for child vehicle seats, adjustment of the length by which the connectors protrude from the child safety seat is accomplished by a manually operable mechanism. Thus, there is a need for a more user-friendly and convenient system in order to facilitate and ensure safe mounting of portable child safety seats in vehicles. Moreover, in many of the hitherto known mounting systems the adjustment mechanism is separate from the connectors, often arranged between the connectors, and takes up a great deal of space. Moreover, the mounting system is generally integrated in a chassis on which the child safety seat is placed.

### SUMMARY OF THE INVENTION

An object of the present invention is to alleviate one or more of the above problems and to provide an improved, user-friendly and convenient adjustable connecting bar for releasable fastening of a child safety seat to a vehicle seat having fixedly mounted anchoring members.

A further object of the present invention is to alleviate one or more of the above problems and to provide an improved, user-friendly and convenient adjustable mounting arrangement containing a pair of adjustable connecting bars and to a child safety seat containing the same.

According to a first aspect of the invention, there is provided an adjustable connecting bar for releasable fastening of a child safety seat to a vehicle seat provided with fixedly mounted anchoring members. The connecting bar may be rigidly coupled to, or integrated in, the child safety seat. The child safety seat is normally provided with two connecting bars arranged to be coupled to a pair of corresponding anchoring members fixedly mounted in the vehicle seat.

The connecting bar is provided with a coupling device transformable between a locked configuration and a release configuration. The connecting bar comprises a first elongated bar member extending along a longitudinal axis between a distal end provided with the coupling device and a proximal end, and a second elongated bar member extending along a longitudinal axis between a distal end and a proximal end. The first and second elongated bar members are telescopically interconnected and are arranged for relative displacement via one or more intermediate positions between a retracted end position and an extended end position of the connecting bar. The connecting bar comprises a first latch operatively connected with the coupling device and arranged to lock the connecting bar in the extended end position and to prevent retraction of the connecting bar when the coupling device is in the release configuration. The first latch is further arranged to allow retraction of the connecting bar when the coupling device is in the locked configuration. The connecting bar further comprises a second latch functionally controlled by the relative displacement of the first and second elongated bar members. The second latch, in the retracted and extended end positions of the connecting bar, is arranged to be transferrable between an active state and an inactive state. In the active state, the second latch is arranged to prevent extension and to allow retraction of the connecting bar. In the inactive state, the second latch is arranged to allow both extension and retraction of the connecting bar.

The distal end of the second elongated bar member may be spring biased to the proximal end of the first elongated bar member, and the connecting bar further comprises a manually operable ratchet capable of holding the first elongated bar member in the retracted end position against the bias of the spring and capable of ejecting the first elongated bar member to the extended end position.

Thus, when the child safety seat is not in use, the connecting bars may be stowed and at least partly enclosed in the child safety seat in order to facilitate handling and transportation of the portable child safety seat. When the child safety seat is to be mounted to a vehicle seat, the manually operable ratchet(s), if present, can be released and the first elongated bar member of each connecting bar is thereby ejected to the extended end position.

When the connecting bar is in the extended end position and the coupling device is in the release configuration (i.e. the open configuration), retraction of the connecting bar is blocked by the first latch. It is then easy to connect the coupling device provided at an end of the extended connecting bar to a fixedly mounted anchoring member of a vehicle seat. Once the coupling device has been connected to the anchoring member and thereby transformed to the locked configuration (i.e. the closed configuration), the first latch, which is operatively connected with the coupling device, is released and retraction of the connecting bar is allowed. This means that once the coupling devices of the connecting bars have been fastened to the anchoring members of a vehicle seat, the length of the connecting bars can be adjusted by pushing the child safety seat as far as possible against the backrest of the vehicle seat. During this adjustment operation and during use of the child safety seat, the second latch is in the active state and prevents extension of the connecting bar.

It is advantageous from a safety aspect that adjustment of the length by which the connecting bars protrude from the child safety seat only can be performed once the child safety seat has been fastened to the anchoring members of the vehicle seat; that is once the coupling device has been transformed to the locked configuration.

Moreover, since the first latch of the connecting bar is operatively connected with the coupling device and thereby functionally controlled by the different configurations of the coupling device (i.e. the open and the closed configuration), no manual operation is required in order to enable adjustment of the length by which the connecting bar(s) protrude from the child safety seat.

When the child safety seat is to be removed from the vehicle seat, the coupling device is transformed to the release configuration, suitably by means of a manually operable release arrangement.

Thereafter, the connecting bar may be retracted to the retracted end position, where the manually operable ratchet, if present, may be arranged to engage and hold the connecting bar in the retracted end position. Once the connecting bar reaches the retracted end position, the second latch is transferred to the inactive state. This means that next time the connecting bar is to be extended, by releasing the manually operable ratchet if present, the second latch does not prevent extension of the connecting bar. Once the connecting bar reaches the extended end position, the second latch is transferred to the active state.

In a specific embodiment of the adjustable connecting bar, the second elongated bar member at least partly encases a part of the first elongated bar member. In this embodiment, the first elongated bar member has a side wall provided with a first aperture and a second aperture along its longitudinal axis, and the second elongated element has a side wall provided with a row of apertures along its longitudinal axis. The plurality of apertures of the second elongated bar member is arranged to overlap the second aperture of the first elongated bar member when the connecting bar member is in an intermediate position. The first elongated bar member houses the first latch which is spring biased to engage the first aperture of the first elongated bar member. The first elongated bar member further houses a displaceable rod operatively connected with the coupling device, more specifically the manually operable release arrangement is connected and spring biased to the displaceable rod. The displaceable rod is arranged to engage and lever the first latch and thereby lock the first latch in the first aperture when the coupling device is in the release configuration. The first elongated bar member further houses the second latch, which is spring biased to engage the second aperture of the first elongated bar member and any potentially overlapping aperture of the second elongated bar member. The second latch is operatively connected with a gear assembly provided with a lug movable, suitably by means of first and second projecting members housed in the second elongated bar member, between a first position and a second position, such that the second latch is forced against the bias of the spring to disengage the second aperture when the lug is in the second position, the second latch then being in the inactive state.

According to a second aspect of the invention, there is provided an adjustable mounting arrangement for releasable fastening of a child safety seat to a vehicle seat, the arrangement comprising a pair of adjustable connecting bars, optionally operatively connected with each other, the adjustable connecting bars being as described herein.

According to a third aspect of the invention, there is provided a child safety seat, in particular a booster cushion, arranged for releasable fastening to a vehicle seat, the child safety seat comprising an adjustable mounting arrangement as described herein.

The above configuration of the adjustable connecting bar enables convenient and user-friendly mounting of a child safety seat to a vehicle seat. A mounting arrangement containing two connecting bars as described herein can be easily coupled to corresponding fixedly mounted anchoring members of a vehicle seat, and the length of the connecting bars protruding from the child safety seat can be adjusted in a semiautomatic manner. Thus, the number of manual operation steps that need to be performed by the user when mounting the child safety seat is reduced. Moreover, the adjustable connecting bar enables safe and secure mounting of a child safety seat in a vehicle seat.

In addition, the herein-described adjustable mounting arrangement is space-saving since the adjustment mechanism is integrated with, more specifically provided within, the connecting bar. The connecting bars can be fixedly coupled to and integrated with the child safety seat, thereby obviating the need for a separate chassis containing the connecting bars and the adjustment mechanism.

Other features and advantages of the present invention will become apparent from the following description of the invention.

### BRIEF DESCRIPTION OF THE DRAWINGS

Figures 1a and 1b are perspective views illustrating a booster cushion provided with a pair of connecting bars in accordance with the invention. In Figure 1a, the connecting bars are in the extended end position. In Figure 1b, the connecting bars are in the retracted end position.
Figures 2a to 2e are schematic cross-sectional views illustrating the components of the connecting bar in accordance with the invention and how these components function during use of the connecting bar.
Figures 3a and 3b illustrate in more detail the configuration of the gear assembly included in the connecting bar shown in Figures 2a to 2e.
Figures 4a and 4b are schematic views illustrating the mounting steps of a child safety seat, such as a booster cushion, provided with adjustable connecting bars in accordance with the invention.

### DETAILED DESCRIPTION

The invention will now be exemplified by means of the following non-limiting embodiments. In the drawings, like reference numerals identify similar or identical elements.

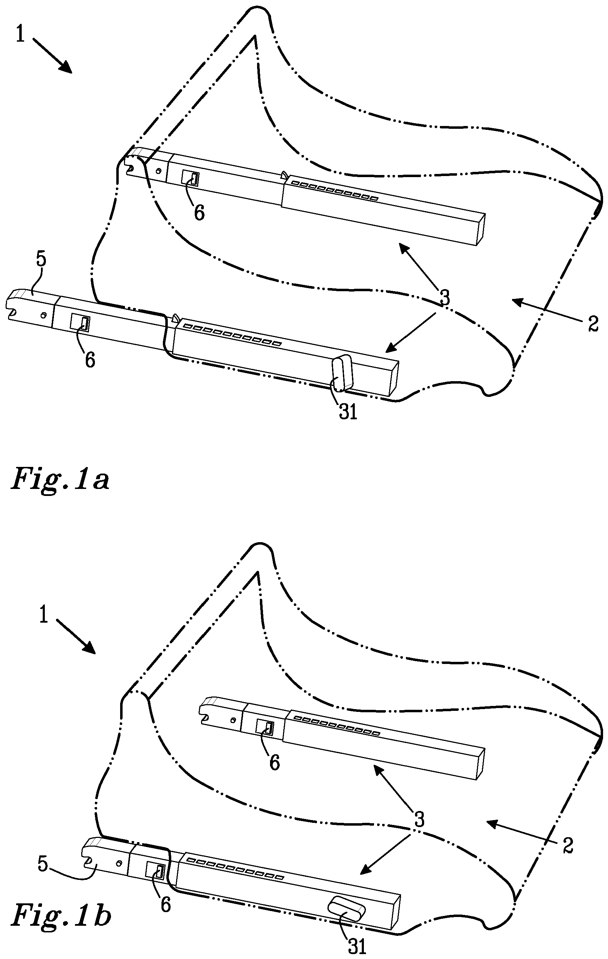

Figures 1a and 1b illustrate a child safety seat in the form of a booster cushion 1 provided with a pair of connecting bars 3 in accordance with the invention. The connecting bars 3 are integrated within the booster cushion 1 and the two connecting bars 3 together form an adjustable mounting arrangement 2 for releasable fastening of the booster cushion 1 to fixedly mounted generally U-shaped rod-like anchoring members (not shown) normally available at the bottom of the backrest of a passenger vehicle seat.

In Figure 1a, the connecting bars 3 are shown in the extended end position.

In Figure 1b, the connecting bars 3 are shown in the retracted end position. The connecting bars 3 are here substantially contained within the booster cushion 1 which means that the booster cushion 1 will be easy to transport and stow since no connectors are projecting therefrom.

The adjustable mounting arrangement 2 containing the pair of connecting bars 3 may be operatively connected with each other via a transverse bar or any other similar arrangement. Alternatively, the adjustable mounting arrangement in accordance with the invention may contain a pair of separate, non-connected connecting bars 3 as shown in Figures 1a and 1b. Each adjustable connecting bar 3 may comprise a coupling device 5, such as an Isofix connector, which is transformable from a locked configuration to a release configuration by means of a manually operable release arrangement 6. The coupling device 5 is, as well-known within the art, transformable from the release configuration (open configuration) to the locked configuration (closed configuration) by means of introducing a rod-like member, such as the fixedly mounted anchoring members, into the "mouth" of the coupling device 5. If the connecting bars 3 are operatively connected together, e.g. via a transverse bar or any similar arrangement, the mounting arrangement 2 may comprise a single manually operable release arrangement 6 arranged to simultaneously transform each coupling device 5 from the locked configuration to the release configuration. In case the adjustable mounting arrangement 2 contains a pair of separate connecting bars 3, each connecting bar 3 may comprise a manually operable release arrangement 6. From a safety aspect, it is advantageous if each adjustable connecting bar 3 comprises a manually operable release arrangement 6. If one release arrangement 6 is accidently operated and the coupling device 5 is unintentionally transformed from the locked configuration to the release configuration, the child safety seat, e.g. booster cushion, is still held in place by the still locked coupling device 5 of the other adjustable connecting bar 3.

The adjustable mounting arrangement 2 may be integral with a child safety seat, such as a booster cushion 1. More particularly, the adjustable mounting arrangement 2, including the connecting bars, 3 may be integrated within the bottom part of the child safety seat, e.g. a booster cushion 1.

A great advantage with the adjustable connecting bar in accordance with the invention is that the entire fastening and adjustment mechanism is integrated within the connecting bar. This configuration is space-saving compared to hitherto known mounting arrangements and provides for a more compact design. This is particularly advantageous when it comes to booster cushions which should be easy to move and transport. Moreover, the integration of an adjustable mounting arrangement containing a pair of the connecting bars in accordance with the invention in a child safety seat, such as a booster cushion, provides for greater design freedom since less consideration needs to be taken in providing enough space for the connecting bars. Alternatively, space in the child safety seat, e.g. booster cushion, which is normally taken up by the mounting arrangement may be used for other arrangements or mechanisms.

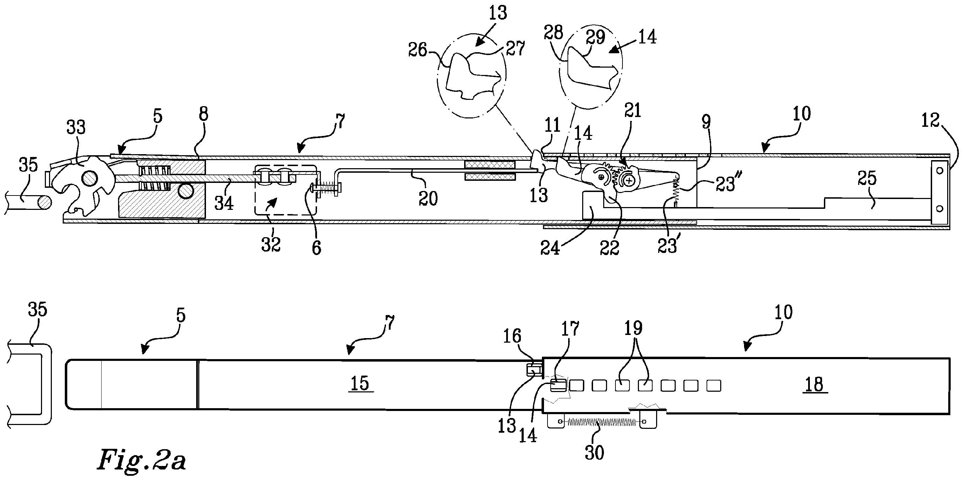

An embodiment of a connecting bar in accordance with the invention is shown in Figure 2a. The connecting bar 3 is provided with a coupling device 5 transformable between a locked configuration and a release configuration. The connecting bar 3 comprises a first elongated bar member 7 extending along a longitudinal axis between a distal end 8 provided with the coupling device 5 and a proximal end 9. The connecting bar 3 further comprises a second elongated bar member 10 extending along a longitudinal axis between a distal end 11 and a proximal end 12.

The first and second elongated bar members 7, 10 are telescopically interconnected and arranged for relative displacement via one or more intermediate positions between a retracted end position and an extended end position of said connecting bar 3.

The connecting bar 3 comprises a first latch 13 which is operatively connected with the coupling device 5 and arranged to lock the connecting bar 3 in the extended end position and to prevent retraction of the connecting bar 3 when the coupling device 5 is in the release configuration. The first latch 13 is further arranged to allow retraction of the connecting bar 3 when the coupling device 5 is in the locked configuration.

The connecting bar 3 further comprises a second latch 14 which is arranged to be functionally controlled by the relative displacement of the first and second elongated bar members 7, 10.

The second latch 14 is arranged to be transferrable between an active state and an inactive state when the connecting bar 3 is in its end positions. When the second latch 14 is in the active state, the second latch 14 prevents extension though allows retraction of the connecting bar 3. When the second latch 14 is in the inactive state, the second latch 14 allows both extension and retraction of the connecting bar 3.

The coupling device 5 may be transformable from the locked configuration to the release configuration by means of the manually operable release arrangement 6.

The second elongated bar member 10 of the connecting bar 3, as shown in Figure 2a, at least partly encases a part of the first elongated bar member 7. The first elongated bar member 7 has a side wall 15 provided with a first aperture 16 and a second aperture 17 along its longitudinal axis. The second elongated element 10 has a side wall 18 provided with a row of apertures 19 along its longitudinal axis. The plurality of apertures 19 of the second elongated bar member 10 is arranged to overlap the second aperture 17 of the first elongated bar member 7 when the connecting bar 3 is in an intermediate position. The first elongated bar member 7 houses the first latch 13, which is biased by a first spring 23' to engage the first aperture 16 of the first elongated bar member 7, and a displaceable rod 20 which is operatively connected with the coupling device 5 and arranged to lever the first latch 13 to thereby lock the first latch 13 in the first aperture 16 when the coupling device 5 is in the release configuration. Moreover, the manually operable release arrangement 6 may be connected and spring biased to the displaceable rod 20.

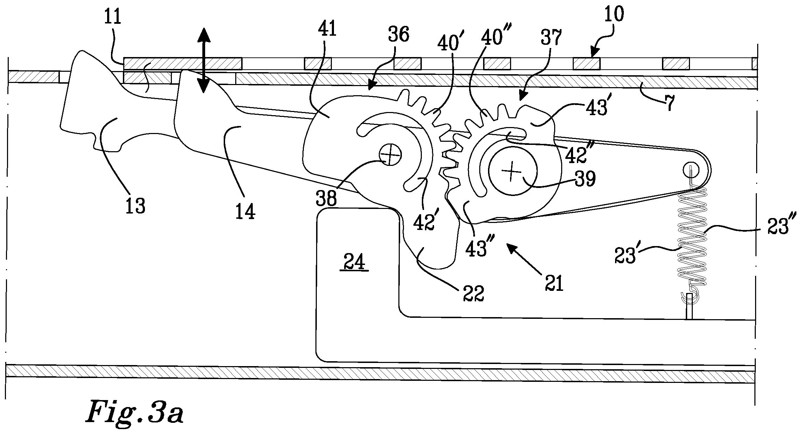

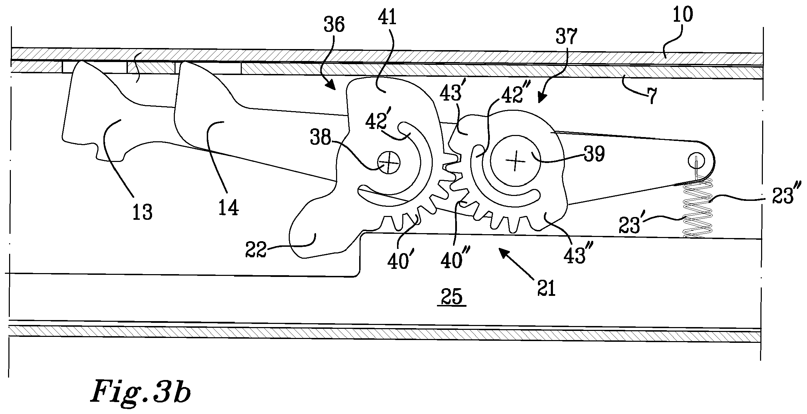

Moreover, the second latch 14 is biased by a second spring 23" to engage the second aperture 17 of the first elongated bar member 7 and any potentially overlapping aperture 19 of the second elongated bar member 10. The second latch 14 is operatively connected with a gear assembly 21 provided with a lug 22 which is movable between a first position and a second position. The second latch 14 is forced against the bias of the second spring 23" to disengage the second aperture 17 when the lug 22 is in the second position, the second latch 14 then being in the inactive state. The gear assembly is described in more detail below with reference to Figures 3a and 3b.

The second elongated bar member 10, as shown in Figure 2a, houses a first projecting member 24 which is arranged to force the lug 22 from its second position to its first position when the connecting bar 3 reaches its extended end position. The second elongated bar member 10 of Figure 2a further houses a second projecting member 25 being arranged to force the lug 22 from its first position to its second position when the connecting bar 3 reaches its retracted end position.

Each of the first and second apertures 16, 17 of the first elongated bar member 7 has, as shown in Figure 2a, a center line extending in parallel to the longitudinal axis of the first elongated bar member 7 and the center line of the first aperture 16 is offset in relation to the center line of the second aperture 17.

The first aperture 16 of the first elongated bar member 7 may be covered by the encasing side wall 18 of the second elongated bar member 10 which, in all intermediate positions of the connecting bar 3 and in the retracted end position of the connecting bar 3, thereby prevents the first latch 13 from protruding through the first aperture 16 .

The first latch 13 may be configured to include a protruding top part having a substantially straight side 26 and a ramp side 27. Upon retraction of the connecting bar 3, the distal end 11 of the second elongated bar member 10 may push on the ramp side 27 of the protruding top part of the first latch 13 which thereby is moved downwards into the first elongated bar member 7.

The second latch 14 may also be configured to include a protruding top part having a substantially straight side 28 and a ramp side 29. Upon retraction of connecting bar 3 while in an intermediate position, the side wall 18 of the second elongated bar member 10 may push on the ramp side 29 of the protruding top part of the second latch 14 which is thereby moved downwards into the first elongated bar member 7. The substantially straight side 28 of the protruding top part of the second latch 14 blocks extension of the connecting bar 3.

The distal end 11 of the second elongated bar member 10 may be biased via a third spring 30 to the proximal end 9 of the first elongated bar member 7. Moreover, the connecting bar 3 may further comprise a manually operable ratchet 31 capable of holding the first elongated bar member 7 in the retracted end position against the bias of the third spring 30 and capable of ejecting the first elongated bar member 7 to the extended end position. The manually operable ratchet 31 may alternatively be arranged on the child safety seat, e.g. a booster cushion, and configured to engage and disengage a rod or any similar arrangement projecting from the connecting bar 3. It is advantageous from a safety aspect that each adjustable connecting bar 3 comprises a manually operable release ratchet 31. However, in case the connecting bars 3 are connected with each other via a transverse bar or any other similar arrangement, the resulting mounting arrangement may comprise a single manually operable release ratchet arranged to simultaneously eject the first elongated bar member 7 of each connecting bar 3 to the extended end position.

The connecting bar 3 may further comprise an indicator mechanism 32 operatively connected with the coupling device 5 to indicate the transformation between the locked configuration and the release configuration of the coupling device 5. The configuration of such indicator mechanisms is well known within the art. The indicator mechanism itself is not included in Fig. 2a, but its preferred position is indicated by the reference number 32.

Figures 2a illustrates a type of coupling device 5 which may be used in the connecting bar 3 described hereinabove. It should be observed that the connecting bar 3 described herein alternatively may comprise any other type of coupling device which is transformable between a locked configuration and a release configuration and suitable for releasable fastening to fixedly mounted anchoring members of a vehicle seat.

The coupling device 5 of Figure 2a comprises a hook member 33 which is pivotable to thereby transform the coupling device between the locked configuration and the release configuration and a displaceable latch member 34 spring biased to engage with the hook member 33 to latch the hook member 33 in the locked configuration. The manually operable release arrangement 6 may be operatively connected with the displaceable latch member 34 for selectively disengaging the latch member 34 from the hook member 33.

Figures 2a to 2e illustrate how the components of the connecting bar 3 will function during use of the connecting bar 3.

In Figure 2a, the connecting bar 3 is in the extended end position and the coupling device 5 is in the release configuration. Since the coupling device is in the release configuration, the displaceable rod 20 levers and locks the first latch 13 in the first aperture 16 of the first elongated bar member 7.The first latch 13 thereby locks the connecting bar 3 in the extended end position and prevents retraction thereof. The second latch 14 is in its active state but is blocked from protruding through the second aperture 17 by the encasing sidewall 18 of the second elongated element 10.

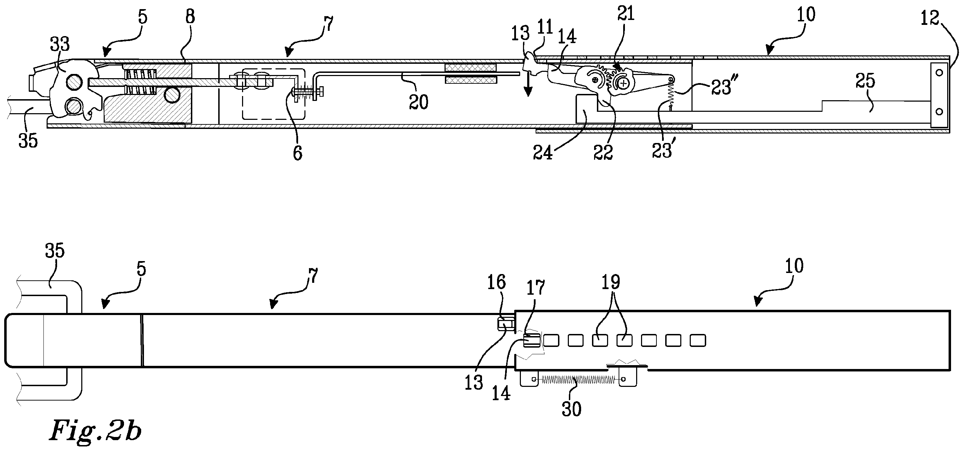

In Figure 2b, the coupling device 5 has been transformed from the release configuration (shown in Figure 2a) to the locked configuration by fastening the coupling device 5 to a U-shaped rod-like anchoring member 35. By locking the coupling device, the displaceable rod 20 is moved away from the first latch 13 so that the first latch 13 is merely spring biased into engagement with the first aperture 16. The first latch 13 is thus movable downwards when the distal end 11 of the second elongated bar member 10 pushes on the ramp side 27 of the protruding top part of the first latch 13, and retraction of the connecting bar 3 is thereby allowed.

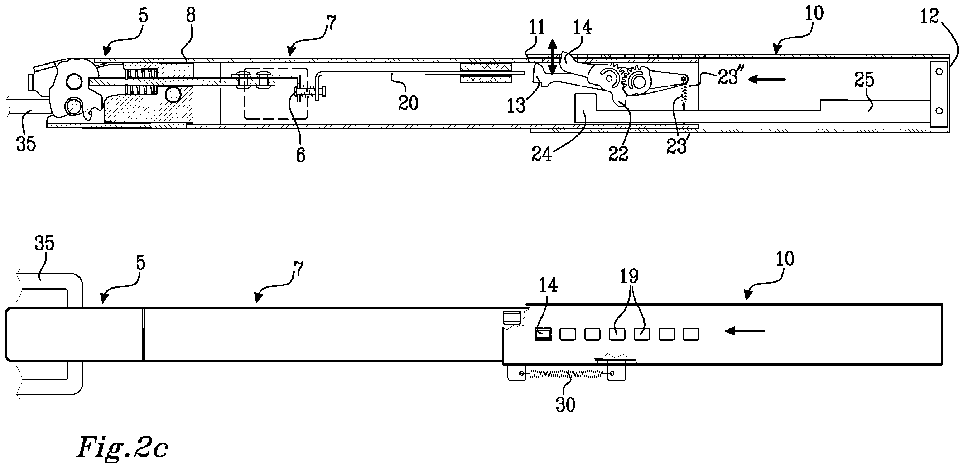

Figure 2c illustrates the connecting bar 3 in an intermediate position. The coupling device 5 is still in the locked configuration. The second latch 14 is in its active state, which means that it is spring biased into engagement with the second aperture 17 of the first elongated bar member 7 and any potentially overlapping aperture 19 of the second elongated bar member 10. The second latch 14 thereby prevents extension of the connecting bar 3 but allows retraction thereof. The lug 22 is in its first position. The second latch 14 is thus moveable downwards when the distal end 11 of the second elongated bar member 10 pushes on the ramp side 29 of the protruding top part of the second latch 14.

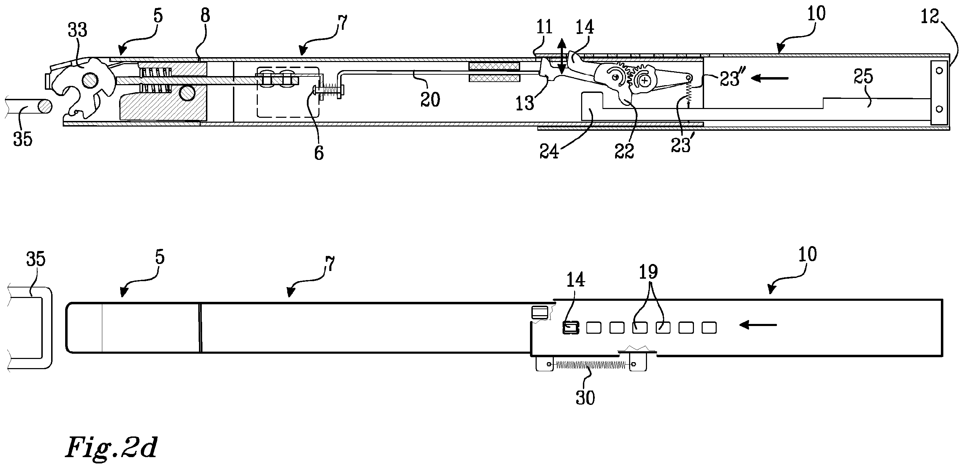

In Figure 2d, the coupling device 5 has been transformed to the release configuration by operation of the manually operable release arrangement 6. However, the first latch 13 is blocked from engaging the first aperture 16 by the encasing side wall 18 of the second elongated bar member 10 and the displaceable rod 20 does not reach the position where it engages and locks the first latch 13.

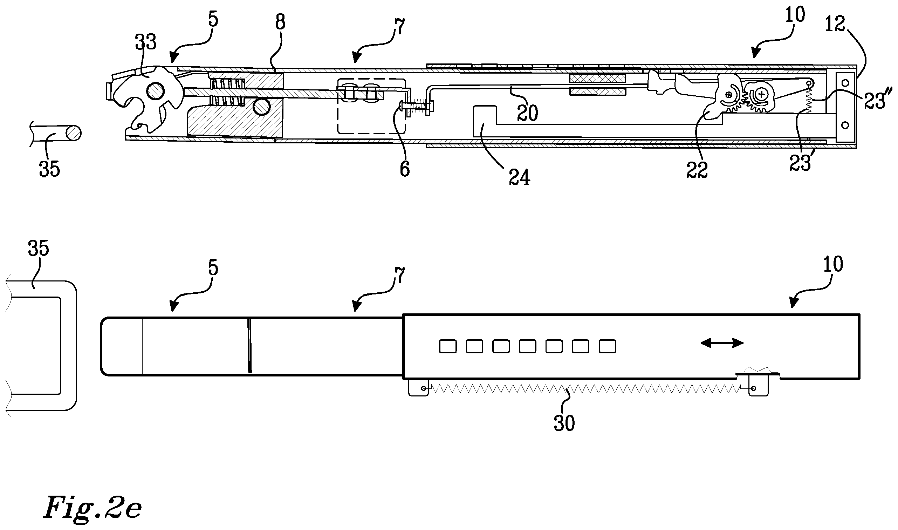

In Figure 2e, the connecting bar 3 has reached its retracted end position. Figure 2e illustrates how the second projecting member 25 forces the lug 22 to move to its second position when the retracted end position is reached. When the lug 22 is moved, the gear assembly 21 to which it is operatively connected then forces the second latch 14 against the bias of the second spring 23" to disengage the second aperture 17. The second latch 14 is thereby moved to the inactive state and extension of the connecting bar 3 is allowed. When the second latch 14 is in the inactive state and the connecting bar reaches an intermediate position, both retraction and extension of the connecting bar are allowed.

Figure 2a illustrates how the first projecting member 24 forces the lug 22 to move to its first position when the extended end position of the connecting bar 3 once again is reached. The second latch 14 is thereby moved to the active state. However, the second aperture 17 is, in the extended end position, blocked by the encasing side wall 18 of the second elongated bar member 10, and the second latch 14 cannot protrude through the second aperture 17.

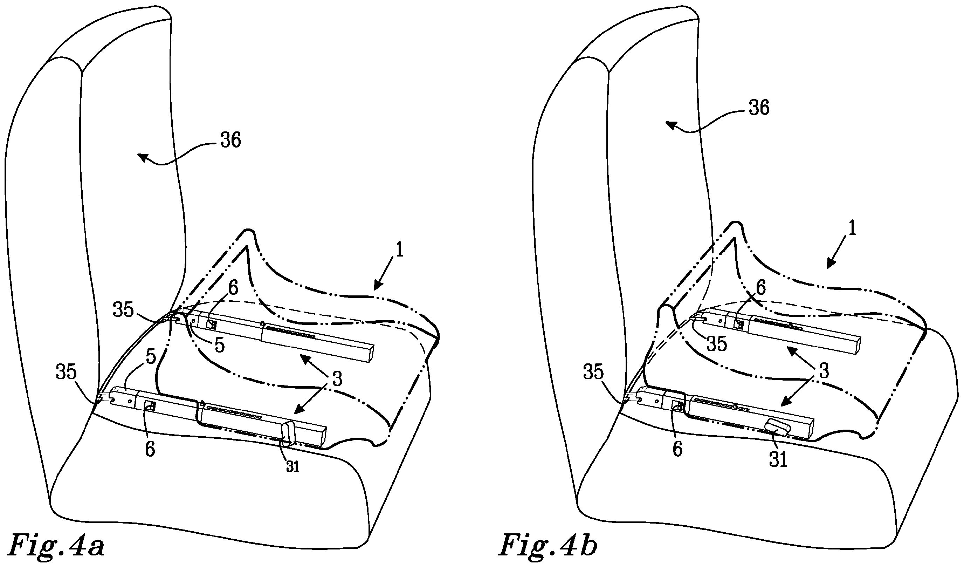

Figure 4a shows a booster cushion 1 with the connecting bars 3 in the extended end position. Once the coupling devices 5 of the connecting bars 3 have been fastened to the anchoring members of a vehicle seat, the length of the connecting bars 3 can be adjusted by pushing the booster cushion as far as possible against the backrest of the vehicle seat. Each connecting bar 3 may then be in any intermediate position, which is illustrated in Figure 4b.

As illustrated in Figure 3a, the gear assembly 21 comprises a first gear 36 and a second gear 37. The first gear 36 is adjacent the second gear 37.The gears 36,37 may be made of a plastic material.

The first gear 36 may be connected to the second latch 14 via a first transverse rod 38. The first gear 36 is rotatable around a first axis extending along the first rod 38 and being transverse to the longitudinal axis of the first elongated bar member 7.

The second gear 37 is rotatable around a second axis extending along a second rod 39 and being transverse to the longitudinal axis of the first elongated bar member 7. The second transverse rod 39 may connect the second gear 37 to the first latch 13 and the second latch 14. The second transverse rod 39 may extend along the entire width of the connecting bar 3. The second transverse rod 39 may even extend out from a side wall of the connecting bar 3 in order for the manually operable ratchet to engage the second transverse rod 39 and thereby hold the first elongated bar member 7 in the retracted end position.

Each of the first and second gears 36, 37 is provided with teeth 40 on at least a part of the outer periphery of the gear 36,37. The teeth 40' of the first gear 36 are arranged to engage with the teeth 40" on the adjacent second gear 37. The first gear 36 includes a first protruding part forming the lug 22 and a second protruding part forming a cam 41.

Figure 3a illustrates the first position of the lug 22. When the lug 22 is in the first position, the second latch 14 is in the active state. The bias of the second spring 23" forces the protruding top part of the second latch 14 to engage the second aperture 17. When the connecting bar 3 is in the extended end position, the protruding top part of the second latch 14 is, as shown in Figure 2a, blocked from protruding through the second aperture 17 by the encasing side wall 18 of the second elongated element 10. When the connecting bar 3 is in an intermediate position, the protruding top part of the second latch 14 is, as shown in Figure 2c, allowed to protrude through the second aperture 17 and any overlapping aperture 19 of the second elongated bar member 10. When the lug 22 is in the first position, the cam 41 of the first gear 36 is in non-contact with the side wall 15 of first elongated bar member 7. Since the second latch 14 is merely spring biased to bring the protruding top part of the second latch into engagement with the second aperture 17 and any potentially overlapping aperture 19, the second latch is moved downwards if the protruding top part thereof is pushed downwards, thereby allowing retraction of the connecting bar 3.

Figure 3b illustrates the second position of the lug 22. When the lug 22 is moved to the second position, the cam 41 of the first gear 36 is brought into contact with the side wall 15 of the first elongated bar member 7, thereby moving the first rod 38 downwards. When the first rod 38 is moved downwards, the second latch 14 is also moved downwards and forced against the bias of the second spring 23" to disengage the protruding top part of the second latch 14 from the second aperture 17. The second latch 14 is then in the inactive state as shown in Figure 2e.

In order to avoid unintentional movement of the lug 22 from the first position to the second position or vice versa, the gear assembly 21 is configured in such way that the gears 36,37 engage with less force in the end positions thereof (i.e. when the lug is in the first position or second position) than in any intermediate position.

A way to achieve this is to provide at least one of the first and second gears with a recess 42', 42" adjacent the teeth-containing periphery of the gear. A gear with a recess is more resilient than a solid gear. Moreover, at least one of the first axis and the second axis is eccentrically arranged in relation to the first and second gear 36,37, respectively. Moreover, the second gear 37 may, as shown in Figure 3b, have protruding portions 43',43" on each side of the teeth 40". These protruding portions engage with the first gear 36 and stop further rotation of the gears 36,37.

While the invention has been described in detail and with reference to specific embodiments thereof, it will be apparent for one skilled in the art that various changes and modifications can be made therein without departing from the scope thereof, as long as they fall within the scope of the claims.

## Claims

1. An adjustable connecting bar (3) for releasable fastening of a child safety seat (1) to a vehicle seat having fixedly mounted anchoring members, said connecting bar (3) being provided with a coupling device (5) transformable between a locked configuration and a release configuration, said connecting bar (3) comprising a first elongated bar member (7) extending along a longitudinal axis between a first distal end (8) provided with said coupling device (5) and a first proximal end (9), and a second elongated bar member (10) extending along a longitudinal axis between a second distal end (11) and a second proximal end (12), wherein
- said first and second elongated bar members (7, 10) are telescopically interconnected and arranged for relative displacement via one or more intermediate positions between a retracted end position and an extended end position of said connecting bar (3);
- said connecting bar (3) comprises a first latch (13) being operatively connected with said coupling device (5), **characterised in that** said first latch (13) being arranged to lock said connecting bar (3) in said extended end position and to prevent retraction of said connecting bar (3) when said connecting bar (3) is in said extended end position and said coupling device (5) is in said release configuration, and said first latch (13) being arranged to allow retraction of said connecting bar (3) when said coupling device (5) is in said locked configuration;
- said connecting bar (3) comprises a second latch (14) being functionally controlled by the relative displacement of the first and second elongated bar members (7, 10), said second latch (14) being arranged to be transferrable from an active state to an inactive state when said connecting bar (3) is in said retracted end position, and said second latch (14) being arranged to be transferrable from said inactive state to said active state when said connecting bar (3) is in said extended end position, wherein in said active state said second latch (14) is arranged to prevent extension and to allow retraction of said connecting bar (3), and wherein in said inactive state said second latch is arranged to allow both extension and retraction of said connecting bar (3)
- said coupling device (5) is transformable from said locked configuration to said release configuration by means of a manually operable release arrangement (6);
- said coupling device (5) comprises a hook member (33) being pivotable to thereby transform the coupling device between said locked configuration and said release configuration and a displaceable latch member (34) spring biased to engagement with the hook member (33) to latch the hook member (33) in the locked configuration, said manually operable release arrangement (6) being operatively connected with the displaceable latch member (34) for selectively disengaging the latch member (34) from the hook member (33); and
- said second elongated bar member (10) at least partly encases a part of said first elongated bar member (7), said first elongated bar member (7) having a side wall (15) provided with a first aperture (16) and a second aperture (17) along its longitudinal axis, said second elongated bar element (10) having a side wall (18) provided with a row of apertures (19) along its longitudinal axis, said row of apertures (19) of the second elongated bar member (10) being arranged to overlap the second aperture (17) of the first elongated bar member (7) when the connecting member (3) is in an intermediate position, said first elongated bar member (7) housing:
∘ said first latch (13) which is biased by a first spring (23') to engage said first aperture (16) of the first elongated bar member (7), and a displaceable rod (20) operatively connected with the coupling device (5) and arranged to lever said first latch (13) and thereby lock said first latch (13) in said first aperture (16) when said coupling device (5) is in said release configuration, and
∘ said second latch (14) which is biased by a second spring (23") to engage said second aperture (17) of the first elongated bar member (7) and any potentially overlapping aperture (19) of the second elongated bar member (10) and operatively connected with a gear assembly (21) provided with a lug (22) movable between a first position and a second position, said second latch (14) being forced against the bias of the second spring (23") to disengage said second aperture (17) when the lug (22) is in said second position, the second latch (14) then being in the inactive state.

2. An adjustable connecting bar (3) according to claim 1, wherein the manually operable release arrangement (6) is connected and spring biased to the displaceable rod (20).

3. An adjustable connecting bar according to claim 1 or claim 2, said second elongated bar member housing a first projecting member (24) being arranged to force the lug (22) from its first position to its second position when the connecting bar (3) is in the retracted end position and a second projecting member (25) being arranged to force the lug (22) from its second position to its first position when the connecting bar (3) is in the extended end position.

4. An adjustable connecting bar (3) according to any one of the preceding claims, wherein each of the first and second apertures (16, 17) has a center line extending in parallel to the longitudinal axis of the first elongated bar member (7) and the center line of the first aperture (16) is offset in relation to the center line of the second aperture (17).

5. An adjustable connecting bar (3) according to any one of the preceding claims, wherein the first aperture (16) of the first elongated bar member (7) is covered by the encasing second elongated bar member (10) thereby preventing engagement of the first latch (13) in said first aperture (16) in all intermediate positions of the connecting bar (3) and in the retracted end position of the connecting bar (3).

6. An adjustable connecting bar (3) according to any one of the preceding claims, wherein the first latch (13) comprises a protruding top part configured to have a substantially straight side (26) and a ramp side (27).

7. An adjustable connecting bar (3) according to any one of the preceding claims, wherein the second latch (14) comprises a protruding top part configured to have a substantially straight side (28) and a ramp side (29).

8. An adjustable connecting bar (3) according to any of the preceding claims, wherein the second distal end (11) of the second elongated bar member (10) is biased by a third spring (30) to the proximal end (9) of the first elongated bar member (7) and the connecting bar (3) further comprises a manually operable ratchet (31) capable of holding the first elongated bar member (7) in the retracted end position against the bias of the third spring (30) and capable of ejecting the first elongated bar member (7) to the extended end position.

9. An adjustable connecting bar (3) according to any of the preceding claims, further comprising an indicator mechanism (32) operatively connected with the coupling device (5) to indicate the transformation between said locked configuration and said release configuration.

10. An adjustable mounting arrangement (2) for releasable fastening of a child safety seat (1) to a vehicle seat having fixedly mounted anchoring members, said arrangement (2) comprising a pair of adjustable connecting bars (3), **characterized in that** each of the adjustable connecting bars (3) is an adjustable connecting bar according to any one of the preceding claims.

11. An adjustable mounting arrangement (2) according to claim 10, wherein each adjustable connecting bar (3) comprises a manually operable release arrangement (6) upon which operation the coupling device (5) is transformable from said locked configuration to said release configuration.

12. An adjustable mounting arrangement according to claim 10 or 11, wherein in each adjustable connecting bar the second distal end (11) of the second elongated bar member (10) is biased by a third spring (30) to the proximal end (9) of the first elongated bar member (7) and each connecting bar (3) further comprises a manually operable ratchet (31) capable of holding in each adjustable connecting bar the first elongated bar member (7) in the retracted end position against the bias of the spring (30) and capable of ejecting the first elongated bar member (7) to the extended end position.

13. A child safety seat (1) arranged for releasable fastening to a vehicle seat **characterized by** comprising an adjustable mounting arrangement (2) according to any one of claims 10 to 12.

14. A child safety seat (1) according to claim 13, wherein the child safety seat is a booster cushion (1).

## Patentansprüche

1. Einstellbare Verbindungsstange (3) zum lösbaren Befestigen eines Kindersicherheitssitzes (1) an einem Fahrzeugsitz mit fest montierten Verankerungselementen, wobei die Verbindungsstange (3) mit einer Kopplungsvorrichtung (5) versehen ist, die zwischen einer verriegelten Konfiguration und einer Freigabekonfiguration transformierbar ist, wobei die Verbindungsstange (3) ein erstes längliches Stangenelement (7) umfasst, das sich entlang einer Längsachse zwischen einem ersten distalen Ende (8), versehen mit der Kopplungsvorrichtung (5), und einem ersten proximalen Ende (9) erstreckt, und ein zweites längliches Stangenelement (10), das sich entlang einer Längsachse zwischen einem zweiten distalen Ende (11) und einem zweiten proximalen Ende (12) erstreckt, wobei
- das erste und zweite längliche Stangenelement (7, 10) teleskopisch verbunden und für eine relative Versetzung über eine oder mehrere Zwischenpositionen zwischen einer eingefahrenen Endposition und einer ausgefahrenen Endposition der Verbindungsstange (3) angeordnet sind;
- die Verbindungsstange (3) einen ersten Riegel (13) umfasst, der operativ mit der Kopplungsvorrichtung (5) verbunden ist, **dadurch gekennzeichnet, dass**
der erste Riegel (13) angeordnet ist, um die Verbindungsstange (3) in der ausgefahrenen Endposition zu verriegeln und ein Zurückziehen der Verbindungsstange (3) zu verhindern, wenn sich die Verbindungsstange (3) in der ausgefahrenen Endposition befindet und sich die Kopplungsvorrichtung (5) in der Freigabekonfiguration befindet, und wobei der erste Riegel (13) angeordnet ist, um ein Zurückziehen der Verbindungsstange (3) zu gestatten, wenn sich die Kopplungsvorrichtung (5) in der verriegelten Konfiguration befindet;
- die Verbindungsstange (3) einen zweiten Riegel (14) umfasst, der funktional durch das relative Versetzen des ersten und zweiten länglichen Stangenelements (7, 10) gesteuert wird, wobei der zweite Riegel (14) angeordnet ist, um von einem aktiven Status in einen inaktiven Status transferierbar zu sein, wenn sich die Verbindungsstange (3) in der zurückgezogenen Endposition befindet, und wobei der zweite Riegel (14) angeordnet ist, um von dem inaktiven Status in den aktiven Status transferierbar zu sein, wenn sich die Verbindungsstange (3) in der ausgefahrenen Endposition befindet, wobei der zweite Riegel (14) in dem aktiven Status angeordnet ist, um ein Ausfahren der Verbindungsstange (3) zu verhindern und ihr Zurückziehen zu gestatten, und wobei der zweite Riegel im inaktiven Status angeordnet ist, um sowohl ein Ausfahren als auch ein Einfahren der Verbindungsstange (3) zu gestatten;
- die Kopplungsvorrichtung (5) mittels einer manuell betätigbaren Freigabeanordnung (6) von der verriegelten Konfiguration in die Freigabekonfiguration transformierbar ist;
- die Kopplungsvorrichtung (5) ein Hakenelement (33), das drehbar ist, um dadurch die Kopplungsvorrichtung zwischen der verriegelten Konfiguration und der Freigabekonfiguration zu transformieren, und ein versetzbares Verriegelungselement (34) umfasst, das für einen Eingriff mit dem Hakenelement (33) federbelastet ist, um das Hakenelement (33) in der gesperrten Konfiguration zu verriegeln, wobei die manuell betätigbare Freigabeanordnung (6) operativ mit dem versetzbaren Verriegelungselement (34) verbunden ist, um das Verriegelungselement (34) wahlweise aus dem Eingriff mit dem Hakenelement (33) zu lösen; und
- das zweite längliche Stangenelement (10) mindestens teilweise einen Teil des ersten länglichen Stangenelements (7) einschließt, wobei das erste längliche Stangenelement (7) eine Seitenwand (15) aufweist, die entlang ihrer Längsachse mit einer ersten Öffnung (16) und einer zweiten Öffnung (17) versehen ist, wobei das zweite längliche Stangenelement (10) eine Seitenwand (18) aufweist, die entlang ihrer Längsachse mit einer Reihe von Öffnungen (19) versehen ist, wobei die Reihe von Öffnungen (19) des zweiten länglichen Stangenelements (10) angeordnet ist, um die zweite Öffnung (17) des ersten länglichen Stangenelements (7) zu überlappen, wenn das Verbindungselement (3) in einer Zwischenposition ist, wobei in dem ersten länglichen Stangenelement (7) Folgendes aufgenommen ist:
∘ der erste Riegel (13), der durch eine erste Feder (23') vorgespannt ist, um in die erste Öffnung (16) des ersten länglichen Stangenelements (7) einzugreifen, und eine versetzbare Stange (20), die operativ mit der Kopplungsvorrichtung (5) verbunden und angeordnet ist, um den ersten Riegel (13) zu hebeln und dadurch den ersten Riegel (13) in der ersten Öffnung (16) zu sperren, wenn sich die Kopplungsvorrichtung (5) in der Freigabekonfiguration befindet, und
∘ der zweite Riegel (14), der durch eine zweite Feder (23") vorgespannt ist, um in die zweite Öffnung (17) des ersten länglichen Stangenelements (7) und eine potenziell überlappende Öffnung (19) des zweiten länglichen Stangenelements (10) einzugreifen, und operativ mit einer Getriebeanordnung (21) verbunden ist, die mit einem Ansatz (22) versehen ist, der zwischen einer ersten Position und einer zweiten Position bewegbar ist, wobei der zweite Riegel (14) gegen die Vorspannung der zweiten Feder (23'') gedrängt wird, um die zweite Öffnung (17) auszurücken, wenn sich der Ansatz (22) in der zweiten Position befindet, wobei der zweite Riegel (14) dann im inaktiven Status ist.

2. Einstellbare Verbindungsstange (3) nach Anspruch 1, wobei die manuell betätigbare Freigabeanordnung (6) mit der versetzbaren Stange (20) verbunden und federbelastet ist.

3. Einstellbare Verbindungsstange nach Anspruch 1 oder Anspruch 2, wobei in dem zweiten länglichen Stangenelement ein erstes vorstehendes Element (24) aufgenommen ist, das angeordnet ist, um den Ansatz (22) von seiner ersten Position in seine zweite Position zu drängen, wenn sich die Verbindungsstange (3) in der zurückgezogenen Endposition befindet, und ein zweites vorstehendes Element (25), das angeordnet ist, um den Ansatz (22) von seiner zweiten Position in seine erste Position zu drängen, wenn sich die Verbindungsstange (3) in der ausgefahrenen Endposition befindet.

4. Einstellbare Verbindungsstange (3) nach einem der vorangehenden Ansprüche, wobei jede von der ersten und zweiten Öffnung (16, 17) eine Mittellinie aufweist, die sich parallel zur Längsachse des ersten länglichen Stangenelements (7) erstreckt, und die Mittellinie der ersten Öffnung (16) in Relation zu der Mittellinie der zweiten Öffnung (17) versetzt ist.

5. Einstellbare Verbindungsstange (3) nach einem der vorangehenden Ansprüche, wobei die erste Öffnung (16) des ersten länglichen Stangenelements (7) von dem einschließenden zweiten länglichen Stangenelement (10) verdeckt ist, wodurch in allen Zwischenpositionen der Verbindungsstange (3) und in der zurückgezogenen Endposition der Verbindungsstange (3) ein Eingreifen des ersten Riegels (13) in die erste Öffnung (16) verhindert wird.

6. Einstellbare Verbindungsstange (3) nach einem der vorangehenden Ansprüche, wobei der erste Riegel (13) einen vorstehenden oberen Teil umfasst, der dazu ausgelegt ist, eine im Wesentlichen gerade Seite (26) und eine Rampenseite (27) aufzuweisen.

7. Einstellbare Verbindungsstange (3) nach einem der vorangehenden Ansprüche, wobei der zweite Riegel (14) einen vorstehenden oberen Teil umfasst, der dazu ausgelegt ist, eine im Wesentlichen gerade Seite (28) und eine Rampenseite (29) aufzuweisen.

8. Einstellbare Verbindungsstange (3) nach einem der vorangehenden Ansprüche, wobei das zweite distale Ende (11) des zweiten länglichen Stangenelements (10) durch eine dritte Feder (30) zu dem proximalen Ende (9) des ersten länglichen Stangenelements (7) vorgespannt ist, und die Verbindungsstange (3) ferner eine manuell betätigbare Klinke (31) umfasst, die in der Lage ist, das erste längliche Stangenelement (7) in der zurückgezogenen Endposition gegen die Vorspannung der dritten Feder (30) zu halten und in der Lage ist, das erste längliche Stangenelement (7) in die ausgefahrene Endposition auszugeben.

9. Einstellbare Verbindungsstange (3) nach einem der vorangehenden Ansprüche, ferner umfassend einen Indikatormechanismus (32), der operativ mit der Kopplungsvorrichtung (5) verbunden ist, um die Transformation zwischen der gesperrten Konfiguration und der Freigabekonfiguration anzugeben.

10. Einstellbare Montageanordnung (2) zum lösbaren Befestigen eines Kindersicherheitssitzes (1) an einem Fahrzeugsitz mit fest montierten Verankerungselementen, wobei die Anordnung (2) ein Paar einstellbarer Verbindungsstangen (3) umfasst, **dadurch gekennzeichnet, dass** jede der einstellbaren Verbindungsstangen (3) eine einstellbare Verbindungsstange nach einem der vorangehenden Ansprüche ist.

11. Einstellbare Montageanordnung (2) nach Anspruch 10, wobei jede einstellbare Verbindungsstange (3) eine manuell betätigbare Freigabeanordnung (6) umfasst, bei deren Betrieb die Kopplungsvorrichtung (5) von der gesperrten Konfiguration in die Freigabekonfiguration transformierbar ist.

12. Einstellbare Montageanordnung nach Anspruch 10 oder 11, wobei in jeder einstellbaren Verbindungsstange das zweite distale Ende (11) des zweiten länglichen Stangenelements (10) durch eine dritte Feder (30) zu dem proximalen Ende (9) des ersten länglichen Stangenelements (7) vorgespannt ist und jede Verbindungsstange (3) ferner eine manuell betätigbare Klinke (31) umfasst, die in der Lage ist, in jeder einstellbaren Verbindungsstange das erste längliche Stangenelement (7) in der zurückgezogenen Endposition gegen die Vorspannung der Feder (30) zu halten und in der Lage ist, das erste längliche Stangenelement (7) in die ausgefahrene Endposition auszugeben.

13. Kindersicherheitssitz (1), angeordnet für ein lösbares Befestigen an einem Fahrzeugsitz, **dadurch gekennzeichnet, dass** er eine einstellbare Montageanordnung (2) nach einem der Ansprüche 10 bis 12 umfasst.

14. Kindersicherheitssitz (1) nach Anspruch 13, wobei der Kindersicherheitssitz ein Sitzerhöhungskissen (1) ist.

## Revendications

1. Barre de raccordement réglable (3) pour un assujettissement libérable d'un siège de sécurité pour enfant (1) à un siège de véhicule ayant des organes d'ancrage montés de façon fixe, ladite barre de raccordement (3) étant pourvue d'un dispositif de couplage (5) transformable entre une configuration verrouillée et une configuration de libération, ladite barre de raccordement (3) comprenant un premier organe formant barre allongée (7) s'étendant le long d'un axe longitudinal entre une première extrémité distale (8) pourvue dudit dispositif de couplage (5) et une première extrémité proximale (9), et un deuxième organe formant barre allongée (10) s'étendant le long d'un axe longitudinal entre une deuxième extrémité distale (11) et une deuxième extrémité proximale (12), dans laquelle
- lesdits premier et deuxième organes formant barres allongées (7, 10) sont interconnectés de façon télescopique et agencés pour un déplacement relatif via une ou plusieurs positions intermédiaires entre une position d'extrémité rétractée et une position d'extrémité étendue de ladite barre de raccordement (3) ;
- ladite barre de raccordement (3) comprend un premier cliquet (13) étant opérationnellement raccordé audit dispositif de couplage (5), **caractérisé en ce que** ledit premier cliquet (13) étant agencé pour verrouiller ladite barre de raccordement (3) dans ladite position d'extrémité étendue et pour empêcher une rétraction de ladite barre de raccordement (3) quand ladite barre de raccordement (3) est dans ladite position d'extrémité étendue et ledit dispositif de couplage (5) est dans ladite configuration de libération, et ledit premier cliquet (13) étant agencé pour permettre une rétraction de ladite barre de raccordement (3) quand ledit dispositif de couplage (5) est dans ladite configuration verrouillée ;
- ladite barre de raccordement (3) comprend un deuxième cliquet (14) étant fonctionnellement commandé par le déplacement relatif des premier et deuxième organes formant barres allongées (7, 10), ledit deuxième cliquet (14) étant agencé pour être transférable d'un état actif à un état inactif quand ladite barre de raccordement (3) est dans ladite position d'extrémité rétractée, et ledit deuxième cliquet (14) étant agencé pour être transférable dudit état inactif audit état actif quand ladite barre de raccordement (3) est dans ladite position d'extrémité étendue, dans ledit état actif ledit deuxième cliquet (14) étant agencé pour empêcher une extension et permettre une rétraction de ladite barre de raccordement (3), et dans ledit état inactif ledit deuxième cliquet étant agencé pour permettre à la fois une extension et une rétraction de ladite barre de raccordement (3)
- ledit dispositif de couplage (5) est transformable de ladite configuration verrouillée à ladite configuration de libération au moyen d'un agencement de libération actionnable manuellement (6) ;
- ledit dispositif de couplage (5) comprend un organe formant crochet (33) pouvant pivoter pour transformer ainsi le dispositif de couplage entre ladite configuration verrouillée et ladite configuration de libération et un organe formant cliquet déplaçable (34) sollicité par ressort vers une mise en prise avec l'organe formant crochet (33) pour encliqueter l'organe formant crochet (33) dans la configuration verrouillée, ledit agencement de libération actionnable manuellement (6) étant opérationnellement raccordé à l'organe formant cliquet déplaçable (34) pour sélectivement dégager l'organe formant cliquet (34) de l'organe formant crochet (33) ; et
- ledit deuxième organe formant barre allongée (10) enferme au moins partiellement une partie dudit premier organe formant barre allongée (7), ledit premier organe formant barre allongée (7) ayant une paroi latérale (15) pourvue d'une première ouverture (16) et d'une deuxième ouverture (17) le long de son axe longitudinal, ledit deuxième élément formant barre allongée (10) ayant une paroi latérale (18) pourvue d'une rangée d'ouvertures (19) le long de son axe longitudinal, ladite rangée d'ouvertures (19) du deuxième organe formant barre allongée (10) étant agencée pour chevaucher la deuxième ouverture (17) du premier organe formant barre allongée (7) quand l'organe de raccordement (3) est dans une position intermédiaire, ledit premier organe formant barre allongée (7) logeant :
∘ ledit premier cliquet (13) qui est sollicité par un premier ressort (23') pour se mettre en prise avec ladite première ouverture (16) du premier organe formant barre allongée (7), et une tige déplaçable (20) opérationnellement raccordée au dispositif de couplage (5) et agencée pour lever ledit premier cliquet (13) et ainsi verrouiller ledit premier cliquet (13) dans ladite première ouverture (16) quand ledit dispositif de couplage (5) est dans ladite configuration de libération, et
∘ ledit deuxième cliquet (14) qui est sollicité par un deuxième ressort (23") pour se mettre en prise avec ladite deuxième ouverture (17) du premier organe formant barre allongée (7) et toute ouverture potentiellement chevauchante (19) du deuxième organe formant barre allongée (10) et opérationnellement raccordé à un engrenage (21) pourvu d'une patte (22) mobile entre une première position et une deuxième position, ledit deuxième cliquet (14) étant forcé contre la sollicitation du deuxième ressort (23") pour dégager ladite deuxième ouverture (17) quand la patte (22) est dans ladite deuxième position, le deuxième cliquet (14) étant alors dans l'état inactif.

2. Barre de raccordement réglable (3) selon la revendication 1, dans laquelle l'agencement de libération actionnable manuellement (6) est raccordé et sollicité par ressort vers la tige déplaçable (20).

3. Barre de raccordement réglable selon la revendication 1 ou la revendication 2, ledit deuxième organe formant barre allongée logeant un premier organe saillant (24) étant agencé pour forcer la patte (22) de sa première position à sa deuxième position quand la barre de raccordement (3) est dans la position d'extrémité rétractée et un deuxième organe saillant (25) étant agencé pour forcer la patte (22) de sa deuxième position à sa première position quand la barre de raccordement (3) est dans la position d'extrémité étendue.

4. Barre de raccordement réglable (3) selon l'une quelconque des revendications précédentes, chacune des première et deuxième ouvertures (16, 17) ayant une ligne centrale s'étendant parallèlement à l'axe longitudinal du premier organe formant barre allongée (7) et la ligne centrale de la première ouverture (16) étant décalée par rapport à la ligne centrale de la deuxième ouverture (17).

5. Barre de raccordement réglable (3) selon l'une quelconque des revendications précédentes, dans laquelle la première ouverture (16) du premier organe formant barre allongée (7) est recouverte par le deuxième organe formant barre allongée enfermant (10) ce qui empêche la mise en prise du premier cliquet (13) dans ladite première ouverture (16) dans toutes les positions intermédiaires de la barre de raccordement (3) et dans la position d'extrémité rétractée de la barre de raccordement (3).

6. Barre de raccordement réglable (3) selon l'une quelconque des revendications précédentes, dans laquelle le premier cliquet (13) comprend une partie de dessus saillante configurée pour avoir un côté substantiellement droit (26) et un côté rampe (27).

7. Barre de raccordement réglable (3) selon l'une quelconque des revendications précédentes, dans laquelle le deuxième cliquet (14) comprend une partie de dessus saillante configurée pour avoir un côté substantiellement droit (28) et un côté rampe (29).

8. Barre de raccordement réglable (3) selon n'importe laquelle des revendications précédentes, dans laquelle la deuxième extrémité distale (11) du deuxième organe formant barre allongée (10) est sollicitée par un troisième ressort (30) vers l'extrémité proximale (9) du premier organe formant barre allongée (7) et la barre de raccordement (3) comprend en outre un loquet actionnable manuellement (31) apte à maintenir le premier organe formant barre allongée (7) dans la position d'extrémité rétractée contre la sollicitation du troisième ressort (30) et apte à éjecter le premier organe formant barre allongée (7) jusqu'à la position d'extrémité étendue.

9. Barre de raccordement réglable (3) selon n'importe lesquelles des revendications précédentes, comprenant en outre un mécanisme indicateur (32) opérationnellement raccordé au dispositif de couplage (5) pour indiquer la transformation entre ladite configuration verrouillée et ladite configuration de libération.

10. Agencement de montage réglable (2) pour un assujettissement libérable d'un siège de sécurité pour enfant (1) à un siège de véhicule ayant des organes d'ancrage montés de façon fixe, ledit agencement (2) comprenant une paire de barres de raccordement réglables (3), **caractérisée en ce que** chacune des barres de raccordement réglables (3) est une barre de raccordement réglable selon l'une quelconque des revendications précédentes.

11. Agencement de montage réglable (2) selon la revendication 10, dans lequel chaque barre de raccordement réglable (3) comprend un agencement de libération actionnable manuellement (6), opération après laquelle le dispositif de couplage (5) est transformable de ladite configuration verrouillée à ladite configuration de libération.

12. Agencement de montage réglable selon la revendication 10 ou la revendication 11, dans lequel dans chaque barre de raccordement réglable la deuxième extrémité distale (11) du deuxième organe formant barre allongée (10) est sollicitée par un troisième ressort (30) vers l'extrémité proximale (9) du premier organe formant barre allongée (7) et chaque barre de raccordement (3) comprend en outre un loquet actionnable manuellement (31) apte à maintenir dans chaque barre de raccordement réglable le premier organe formant barre allongée (7) dans la position d'extrémité rétractée contre la sollicitation du ressort (30) et apte à éjecter le premier organe formant barre allongée (7) jusqu'à la position d'extrémité étendue.

13. Siège de sécurité pour enfant (1) agencé pour un assujettissement libérable à un siège de véhicule **caractérisé en ce qu'**il comprend un agencement de montage réglable (2) selon l'une quelconque des revendications 10 à 12.

14. Siège de sécurité pour enfant (1) selon la revendication 13, le siège de sécurité pour enfant étant un rehausseur de siège de sécurité pour enfant (1).
